# EUROPÄISCHE PATENTANMELDUNG

(11) **EP 3 372 901 A1**
(43) Veröffentlichungstag der Anmeldung: **12.09.2018**
(21) Anmeldenummer: 18159084.5
(22) Anmeldetag: 28.02.2018
(51) Int. Cl.: F24D 3/10, F16K 11/085, F16K 11/076, F16K 27/06

(54) **ARMATUR**

(30) Priorität: 10.03.2017 DE 202017101386 U
(71) Anmelder: Watts Industries Deutschland GmbH, 76829 Landau (DE)
(72) Erfinder: DÜCK, Johann, 67433 Neustadt/Weinstraße (DE); PRÜFE, Patrick, 76829 Landau (DE)
(74) Vertreter: Patentanwälte Dr. Keller, Schwertfeger Partnerschaft mbB

(57) **Zusammenfassung**

Die vorliegende Erfindung betrifft eine Armatur umfassend ein Gehäuse, einen ersten, einen zweiten, einen dritten und einen vierten Anschluss, die an dem Gehäuse angeordnet sind, ein an dem Gehäuse vorgesehenes Aufnahmeelement (38) für einen Motor und einen von einem Motor antreibbaren Absperrkörper, wobei der Absperrkörper im Inneren des Gehäuses um eine Drehachse drehbar gelagert ist und ausgelegt ist, wenigstens einen Anschluss vollständig oder abschnittsweise zu verschließen, wobei der erste, zweite, dritte und vierte Anschluss in einer Ebene senkrecht zur Drehachse des Absperrkörpers angeordnet sind, wobei der erste Anschluss (26) und der dritte Anschluss (30) entgegengesetzt zueinander liegen und der erste Anschluss (26) mit einem Gewinde erster Art und der dritte Anschluss (30) mit einem Gewinde zweiter Art versehen ist und wobei der zweite Anschluss und der vierte Anschluss (32) entgegengesetzt zueinander an dem Gehäuse angeordnet sind und jeweils entweder ein Gewinde erster Art oder ein Gewinde zweiter Art aufweisen.

## Beschreibung

Die vorliegende Erfindung betrifft Armaturen, wie sie beispielsweise in Heizungsanlagen zur Regelung von Temperaturen eingesetzt werden. Insbesondere betrifft die vorliegende Erfindung eine Armatur, die als Drei-Wege-Mischer oder als Verteiler verwendet werden kann.

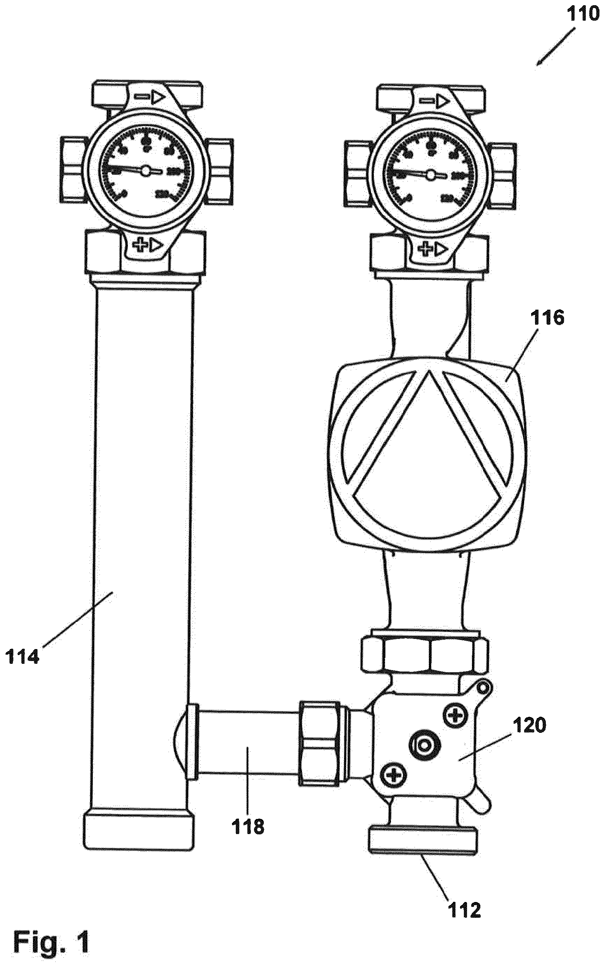

Fig. 1 zeigt eine bekannte Regelgruppe 110 einer Heizungsanlage mit einem Vorlauf 112, einem Rücklauf 114, einer Pumpe 116, einem Verbindungsstück 118 zwischen Vorlauf 112 und Rücklauf 114 und einer Armatur in Form eines Drei-Wege-Mischers 120. Drei-Wege-Mischer dienen dazu, die an einem Verbraucher einer Heizungsanlage wie etwa eine Fußbodenheizung oder ein Heizkörper gewünschte Temperatur eines Heizmediums einzustellen. Hierzu wird über den Vorlauf das heiße Heizmedium von einer Heizvorrichtung und über das Verbindungsstück das abgekühlte Heizmedium aus dem Rücklauf in den Drei-Wege-Mischer geführt und gemischt. Die oberhalb des Drei-Wege- Mischers im Vorlaufstrang angeordnete Pumpe 116 fördert das gemischte Heizmedium mit der gewünschten Temperatur zu den entsprechenden Verbrauchern.

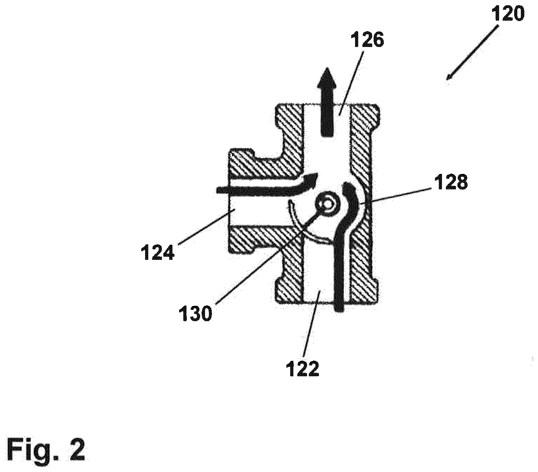

Wie in Figur 2 dargestellt, weist ein bekannter Drei-Wege-Mischer 120 somit einen Eingang 122 für das heiße Heizmedium, einen Eingang 124 für das abgekühlte Heizmedium aus dem Rücklauf und einen Ausgang 126 für das gemischte Heizmedium in die Pumpe 116 auf. Im Inneren des Drei-Wege-Mischers befindet sich ein Mischraum 128, in dem ein verstellbares Absperrmittel 130 vorgesehen ist.

In den meisten Heizungsanlagen befindet sich der Vorlaufstrang in einer Ansicht von vorne rechts vom Rücklaufstrang. Aufgrund von Kundenwünschen oder einer gegebenen Einbausituation können Vorlauf- und Rücklaufstrang vertauscht sein, sodass der Vorlaufstrang auf der linken und der Rücklaufstrang auf der rechten Seite angeordnet sind.

Bedingt durch die Verrohrungssituation in einer Heizungsanlage weisen handelsübliche Drei-Wege-Mischer an zwei entgegengesetzt liegenden Seiten ein Innen- bzw. ein Außengewinde auf. Um den Absperrkörper einzustellen, ist auf der Vorderseite des Drei-Wege-Mischers ein Stellmotor vorgesehen.

Da der Drei-Wege-Mischer an zwei entgegengesetzt liegenden Seiten ein Innen- bzw. ein Außengewinde aufweist und der Stellmotor für den Absperrkörper immer nach vorne weisen sollte, kann ein Drei-Wege-Mischer, der für eine rechtsseitige Anordnung ausgelegt ist, nicht einfach durch Drehung auf eine linksseitige Anordnung übertragen werden. Entweder passen die Gewindeanschlüsse nicht oder der Stellmotor für den Absperrkörper weist nach hinten.

Um einen rechtsseitigen Drei-Wege-Mischer auf einen linksseitigen Drei-Wege-Mischer umzurüsten, sind daher Gewindeadapter notwendig.

Unter einem rechtsseitigen Drei-Wege-Mischer wird hier ein Drei-Wege-Mischer verstanden, der in einer Regelgruppe auf der rechten Seite eingebaut wird. Analog ist ein linksseitiger Drei-Wege-Mischer ein Drei-Wege-Mischer, der in einer Regelgruppe auf der linken Seite eingebaut wird.

Die bekannten Gewindeadapter führen jedoch dazu, dass sich die Baulänge der Drei-Wege-Mischer bei einem rechtsseitigen und linksseitigen Einsatz unterscheidet. Die unterschiedliche Länge der Drei-Wege-Mischer bei rechtsseitigem und linksseitigem Einsatz führt häufig zu Schwierigkeiten beim Einbau in eine Heizungsanlage.

Es ist daher Aufgabe der vorliegenden Erfindung, eine Armatur bereitzustellen, die für einen linksseitigen und rechtsseitigen Einsatz in einer Heizungsanlage als Drei-Wege-Mischer geeignet ist. Darüber hinaus ist es Aufgabe der vorliegenden Erfindung, eine Armatur bereitzustellen, die flexibel einsetzbar ist.

Erfindungsgemäß wird die Aufgabe gelöst durch eine Armatur umfassend ein Gehäuse, einen ersten, einen zweiten, einen dritten und einen vierten Anschluss, die an dem Gehäuse angeordnet sind, ein an dem Gehäuse vorgesehenes Aufnahmeelement für einen Motor und einen von einem Motor antreibbaren Absperrkörper, wobei der Absperrkörper im Inneren des Gehäuses um eine Drehachse drehbar gelagert ist und ausgelegt ist, wenigstens einen Anschluss vollständig oder abschnittsweise zu verschließen, wobei der erste, zweite, dritte und vierte Anschluss in einer Ebene senkrecht zur Drehachse des Absperrkörpers angeordnet sind, wobei der erste und der dritte Anschluss entgegengesetzt zueinander liegen und der erste Anschluss mit einem Gewinde erster Art und der dritte Anschluss mit einem Gewinde zweiter Art versehen ist und wobei der zweite und der vierte Anschluss entgegengesetzt zueinander an dem Gehäuse angeordnet sind und jeweils entweder ein Gewinde erster Art oder ein Gewinde zweiter Art aufweisen.

Mithilfe der vorliegenden Erfindung ist es möglich, die Armatur sowohl als rechtsseitigen als auch als linksseitigen Drei-Wege-Mischer zu verwenden. Darüber hinaus ist die Armatur für den Einsatz als Verteiler geeignet.

Bei einer bevorzugten Ausführungsform umfasst die Armatur ein Gehäuse mit einer quaderförmigen Grundform, welche eine erste Stirnseite und eine, der ersten Stirnseite entgegengesetzt liegende zweite Stirnseite und vier Umfangsseiten aufweist, wobei der erste Anschluss an einer ersten Umfangsseite und der dritte Anschluss an einer der ersten Umfangsseite entgegengesetzt liegenden dritten Umfangsseite des Gehäuses angeordnet sind, wobei der zweite Anschluss an einer zweiten Umfangseite, der vierte Anschluss an der vierten Umfangsseite angeordnet sind, wobei das Aufnahmeelement für einen Motor an einer Stirnseite des Gehäuses vorgesehen ist.

Alternativ umfasst die Armatur ein Gehäuse mit einer zylindrischen Grundform, welche eine erste Stirnseite und eine, der ersten Stirnseite entgegengesetzt liegende zweite Stirnseite und eine Umfangsseite aufweist, wobei der erste, zweite, dritte und vierte Anschluss entlang der Umfangsseite angeordnet sind und das Aufnahmeelement für einen Motor an einer Stirnseite des Gehäuses vorgesehen ist.

Bei beiden Ausführungsformen ist das Gehäuse kompakt gestaltet und kann einfach in eine bestehende Heizungsanlage eingebaut werden.

Es ist weiter bevorzugt, dass im Inneren des Gehäuses ein zylinderförmiger Mischraum vorgesehen ist, in dem der Absperrkörper drehbar angeordnet ist, um gezielt einzelne Anschlüsse zu öffnen und zu verschließen.

Bei einer bevorzugten Weiterbildung der Armatur weist der Absperrkörper eine in einem Schnitt senkrecht zur Drehachse kreisbogenförmige Absperrfläche auf, um beispielsweise für den Fall, in dem der Mischraum zylindrisch ausgebildet ist, eine besonders fluid- bzw. wasserdichte Absperrung eines Anschlusses erzielen.

Bei einer bevorzugten Ausführungsform weist die Absperrfläche eine Bogenlänge auf, die einen Winkelbereich von etwa 80 Grad bis 130 Grad, vorzugsweise von etwa 90 Grad bis 120 Grad abdeckt. Die Bogenlängen in den genannten Bereichen erlauben es, heißes und kaltes Medium gezielt zu mischen und/oder zu verteilen.

Bei einer ersten Ausführungsform weist der Absperrkörper in einem Schnitt senkrecht zur Drehachse die Form eines Kreissegments auf. Alternativ hierzu ist der Absperrkörper in einem Schnitt senkrecht zur Drehachse ankerförmig ausgebildet.

Bei der Verwendung der Armatur als Drei-Wege-Mischer sind erfindungsgemäß der zweite oder der vierte Anschluss mittels einer Abdeckkappe verschlossen, der erste, zweite und vierte Anschluss Eingänge und der dritte Anschluss ein Ausgang.

Bei der Verwendung der Armatur als Drei-Wege-Mischer ist es von Vorteil, dass der Absperrkörper in einem Winkelbereich von etwa 80 Grad bis 110 Grad drehbar ist.

Bei einer bevorzugten Ausführungsform weist die Armatur eine geschlossene Stellung auf, in der ein Anschluss verschlossen ist, und eine geöffnete Stellung, in der der Anschluss geöffnet ist, wobei der Absperrkörper ausgelegt ist, von der geschlossenen Stellung in die geöffnete Stellung entweder im Uhrzeigersinn oder gegen den Uhrzeigersinn zu schwenken.

Hierdurch ist es beispielsweise bei Drei-Wege-Mischern möglich, den gleichen Absperrkörper bei einem linksseitigen und bei einem rechtsseitigen Drei-Wege-Mischer zu verwenden.

Beispielsweise kann die Umschaltung von einem Absperrkörper, der im Uhrzeigersinn dreht, auf einen Absperrkörper, der gegen den Uhrzeigersinn dreht, mittels einer entsprechenden Regel- und Steuervorrichtung erzielt werden.

Um den Umbau von einem rechtsseitigen zu einem linksseitigen Drei-Wege-Mischer jedoch besonders einfach zu gestalten, ist es von Vorteil, dass die Drehrichtung des Motors invertierbar ist.

Bei der Verwendung der erfindungsgemäßen Armatur als Verteiler ist wenigstens ein Anschluss ein Ausgang und wenigstens ein Anschluss ein Eingang. Bei dieser Ausführungsform ist es von Vorteil, dass der Absperrkörper um 360 Grad drehbar ist.

Bevorzugte Ausführungsformen werden anhand der beigefügten Zeichnungen näher erläutert, in denen zeigen:
- Fig. 1: eine Regelgruppe in einer Heizungsanlage,
- Fig. 2: einen aus dem Stand der Technik bekannten Drei-Wege-Mischer,
- Fig. 3: einen Drei-Wege-Mischer in einer Ansicht von vorne,
- Fig. 4: den in Fig. 3 dargestellten Drei-Wege-Mischer in einer ersten perspektivischen Ansicht,
- Fig. 5: den in Fig. 3 dargestellten Drei-Wege-Mischer in einer zweiten perspektivischen Ansicht,
- Fig. 6: ein Absperrelement in perspektivischer Ansicht,
- Fig. 7: einen Absperrkörper in einem Schnitt senkrecht zur Drehachse des Absperrelements,
- Fig. 8: einen Querschnitt durch den in den Figuren 3 bis 5 dargestellten Drei-Wege-Mischer,
- Fig. 9: den Umbau des in den Figuren 3 bis 5 dargestellten Drei-Wege-Mischers von einem rechtsseitigen Drei-Wege-Mischer auf einen linksseitigen Drei-Wege-Mischer,
- Fig. 10: den Einsatz des Drei-Wege-Mischers in einer rechtsseitigen Regelgruppe,
- Fig. 11: den Einsatz des Drei-Wege-Mischers in einer linksseitigen Regelgruppe.

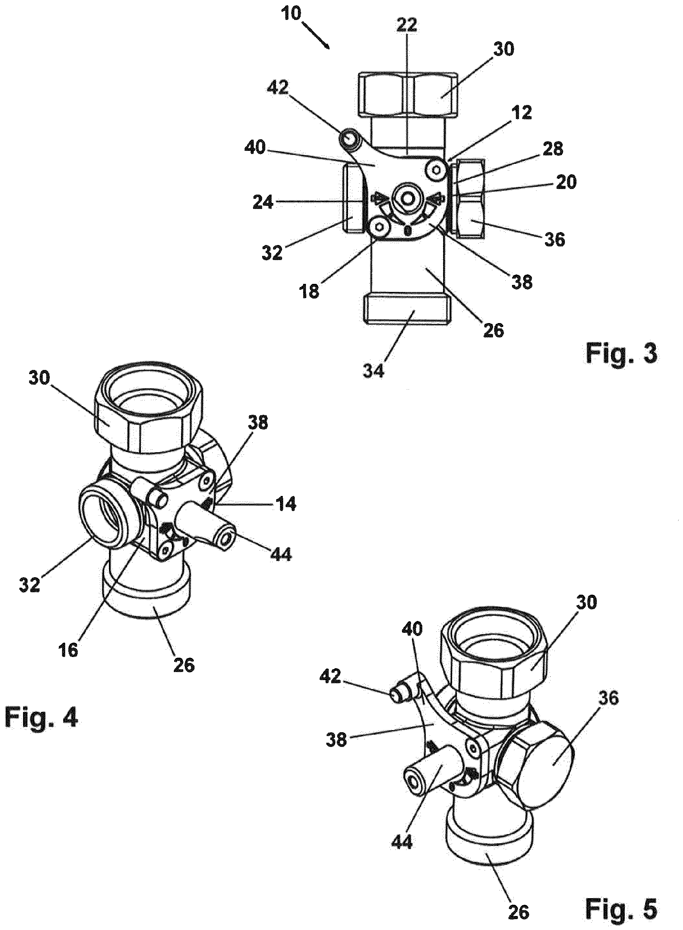

Die Figuren 3 bis 5 zeigen eine Armatur 10 in Form eines rechtsseitigen Drei-Wege-Mischers in verschiedenen perspektivischen Ansichten. Die Armatur 10 umfasst ein Gehäuse 12 mit einer quaderförmigen Grundform, welches eine erste Stirnseite 14 und eine der ersten Stirnseite entgegengesetzt liegende zweite Stirnseite 16 aufweist. Darüber hinaus verfügt das Gehäuse über vier Umfangsseiten 18, 20, 22, 24.

An jeder Umfangsseite 18, 20, 22, 24 befindet sich ein Anschluss 26, 28, 30, 32. Der erste Anschluss 26 befindet sich an der ersten Umfangseite 18 und ist mit einem Vorlauf einer Heizungsanlage verbindbar. Der dritte Anschluss 30 ist an der der ersten Umfangseite 18 entgegengesetzt liegenden dritten Umfangseite 22 des Gehäuses 12 angeordnet und kann mit einer Pumpe verbunden werden. Der erste Anschluss 26 weist ein Außengewinde 34 auf, während der dritte Anschluss 30 mit einem Innengewinde versehen ist.

An den verbleibenden entgegengesetzt liegenden Umfangsseiten 20, 24 sind ein zweiter Anschluss 28 und ein vierter Anschluss 32 vorgesehen. Diese beiden Anschlüsse 28, 32 weisen jeweils ein Außengewinde auf. Bei der in den Fig. 3 bis 5 dargestellten Ausführungsform ist der zweite Anschluss 28 mit einer Abdeckkappe 36 verschlossen. Die Abdeckkappe 36 ist mit dem zweiten Anschluss 28 verschraubt. Der vierte Anschluss 32 ist offen und kann mit einem nicht dargestellten Verbindungstück verbunden werden.

Alle Anschlüsse 26, 28, 30, 32 sind rohrförmig ausgebildet.

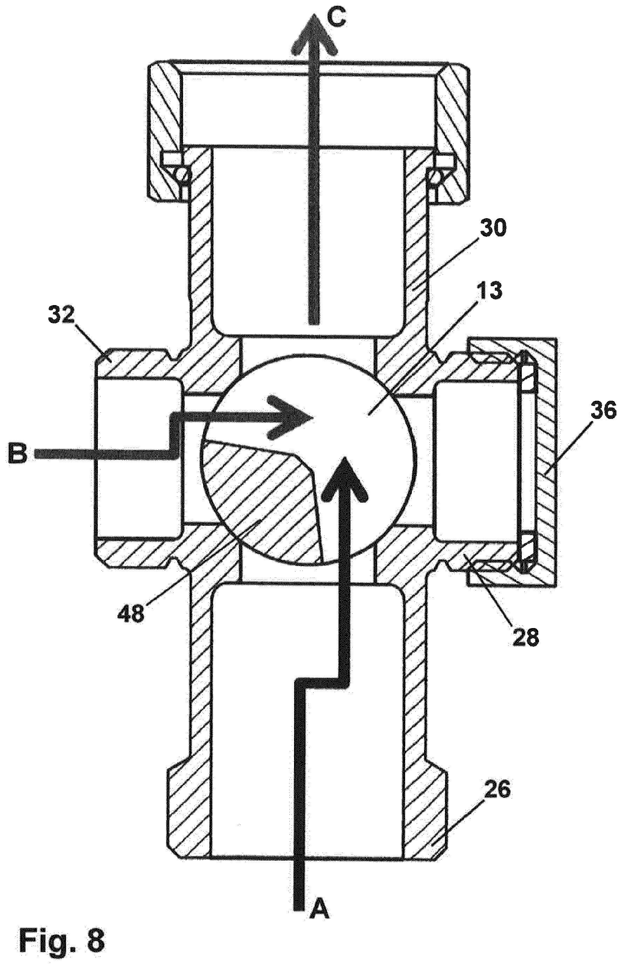

Im Inneren des Gehäuses 12 befindet sich, wie in Fig. 8 zu erkennen ist, ein Mischraum 13. Der Mischraum 13 ist zylinderförmig ausgebildet, wobei sich die Längsachse des Mischraums von der ersten Stirnseite 14 zu der zweiten Stirnseite 16 erstreckt.

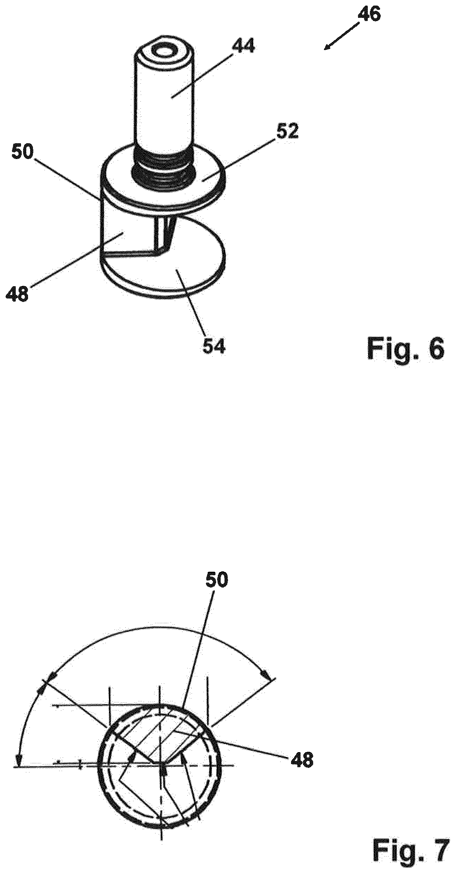

An der ersten Stirnseite 14 befindet sich ein Aufnahmeelement 38 zur Aufnahme eines nicht dargestellten Motors. Das Aufnahmeelement 38 ist plattenförmig ausgebildet und weist einen Arm 40 mit einem Aufnahmepin 42 auf. Der nicht dargestellte Motor treibt eine Welle 44 an, die mit einem in den Figuren 6 und 7 dargestellten Absperrelement 46 verbunden ist. Die zweite Stirnseite 16 ist verschlossen.

Das Absperrelement 46 ist im Inneren des Gehäuses 12 um eine Drehachse senkrecht zu den beiden Stirnseiten 14, 16 drehbar gelagert.

Die ersten, zweiten und vierten Anschlüsse 26, 28, 32 bilden Zugänge in den Drei-Wege-Mischer, während der dritte Anschluss 30 als Ausgang dient. Das Absperrelement 46 ist geeignet, die ersten und zweiten Anschlüsse 26, 28 bzw. die ersten und vierten Anschlüsse 26, 32 vollständig und abschnittsweise zu verschließen, um die durch die ersten und zweiten Anschlüsse 26, 28, bzw. ersten und vierten Anschlüsse 26, 32 fließenden Flüssigkeiten gezielt zu vermischen.

Die Fig. 6 und 7 zeigen das Absperrelement 46 im Detail. Das Absperrelement 46 umfasst einen Absperrkörper 48, der im Querschnitt durch die Drehachse des Absperrelements 46 als Kreissegment ausgebildet ist. Wie insbesondere in Fig. 7 zu erkennen ist, weist der Absperrkörper 48 eine Absperrfläche 50 mit einer Bogenlänge auf, die einen Winkelbereich von etwa 100 Grad bis 110 Grad abdeckt. Bei nicht dargestellten Ausführungsformen kann die Absperrfläche eine Bogenlänge aufweisen, die einen Winkelbereich von etwa 80 Grad bis 130 Grad abdeckt.

An der Ober- und Unterseite des Absperrkörpers befindet sich jeweils eine Abdeckscheibe 52, 54. Eine der beiden Abdeckscheiben ist mit der Welle 44 verbunden.

Die Drehachse des Absperrelements 46 befindet sich im Mittelpunkt des von dem Kreissegment gebildeten Kreises, wobei die Welle 44 eine Verlängerung der Drehachse des Absperrelements 46 bildet.

Der Radius des kreissegmentförmigen Absperrkörpers 48 entspricht dem Radius der Abdeckscheiben 52, 54 und ist an die Maße des Mischraums 13 so angepasst, dass das Absperrelement 46 reibungsarm entlang der Wand des Mischraums gleitet. Das optimale Maß für den Radius des kreissegmentförmigen Absperrkörpers 48 sowie der Abdeckscheiben 52, 54 ist der Radius, bei dem das Absperrelement 46 einen Ein- oder Auslass einerseits möglichst gut abdichtet, aber anderseits dennoch einfach drehbar bleibt.

Der Absperrkörper 48 selbst ist um 360 Grad in beide Drehrichtungen drehbar.

In Fig. 8 ist ein Querschnitt durch einen rechtsseitigen Drei-Weg-Mischer gezeigt. Der in Fig. 8 dargestellte Drei-Wege-Mischer ist beispielsweise in einer Heizanlage eingebaut. Der erste Anschluss 26 ist mit dem Vorlauf, der vierte Anschluss 32 mit dem Rücklauf und der dritte Anschluss 30 mit dem Ausgang bzw. der Pumpe verbunden. Der zweite Anschluss 28 ist mit einer Abdeckkappe 36 verschlossen.

Heißes Heizmedium gelangt über den Vorlauf, wie Pfeil A zeigt, in die Mischkammer 13. Abgekühltes Heizmedium wird, wie Pfeil B zeigt, über den vierten Anschluss 32, der mit dem Rücklauf verbunden ist, in die Mischkammer 13 geführt. In Abhängigkeit von der Stellung des Absperrkörpers 48 wird die notwendige Menge an Heizmedium und abgekühltem Heizmedium in die Mischkammer 13 geführt, um eine gewünschte Temperatur des Heizmediums am Ausgang zu erhalten. Die gemischten Heizmedien gelangen über den Ausgang zu einem Verbraucher einer Heizungsanlage.

Wenn, wie oben angegeben, der Absperrkörper 48 selbst um 360 Grad in beide Drehrichtungen drehbar ist, ist es bei der dargestellten Verwendung der Armatur als Drei-Wege- Mischer jedoch ausreichend, den Absperrkörper 48 in einem Winkelbereich von etwa 80 Grad bis 110 Grad in beide Drehrichtungen zu drehen, nämlich von einer ersten Position, in der der Vorlauf offen ist, in eine zweite Position, in der der Rücklauf geöffnet ist. Die Drehung des Absperrkörpers 48 erfolgt mittels eines Motors, der mit der Welle 44 verbunden ist. Mittels des Motors kann der Stellwinkel des Absperrkörpers 48 festgelegt werden.

Bei einem rechtsseitigen Drei-Wege-Mischer wie in Fig. 8 dargestellt, erfolgt die Drehung von der ersten Position in die zweite Position gegen den Uhrzeigersinn, während bei einem linksseitigen Drei-Wege-Mischer die Drehung von der ersten Position in die zweite Position im Uhrzeigersinn erfolgt. Aus regelungstechnischen Gründen ist es daher vorteilhaft, dass die Drehrichtung des Motors invertierbar ist.

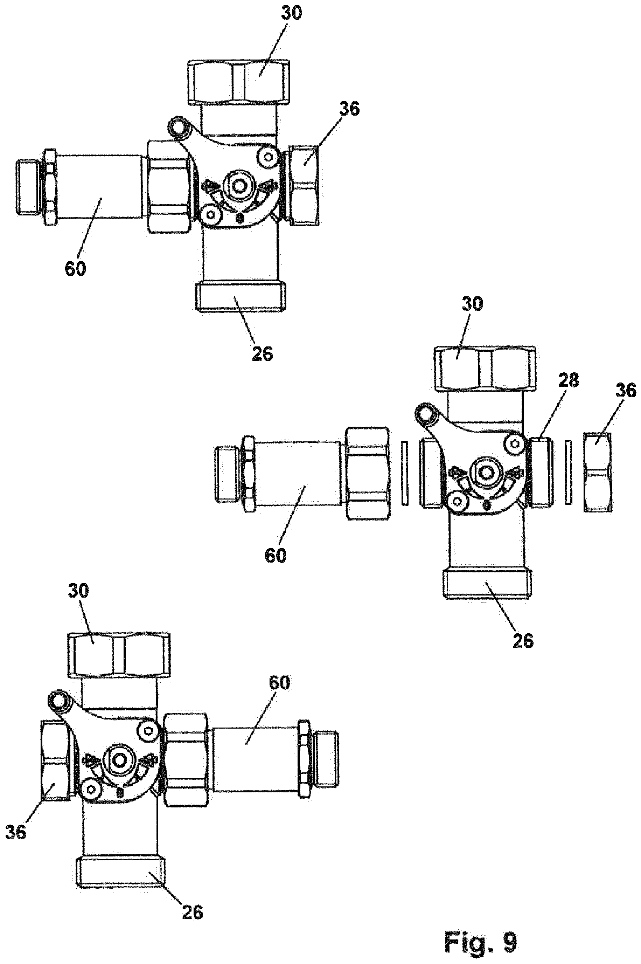

Fig. 9 zeigt den Umbau von einem rechtsseitigen Drei-Wege-Mischer auf einen linksseitigen Drei-Wege-Mischer. Bei dem rechtsseitigen Drei-Wege-Mischer befindet sich eine Abschlusskappe 36 an dem zweiten Anschluss 28 während der vierte Anschluss 32 mit einem Verbindungsstück 60 verbunden ist. Die Abschlusskappe 36 und das Verbindungsstück 60 werden jeweils abgeschraubt und vertauscht an den Anschlüssen 28 und 32 montiert.

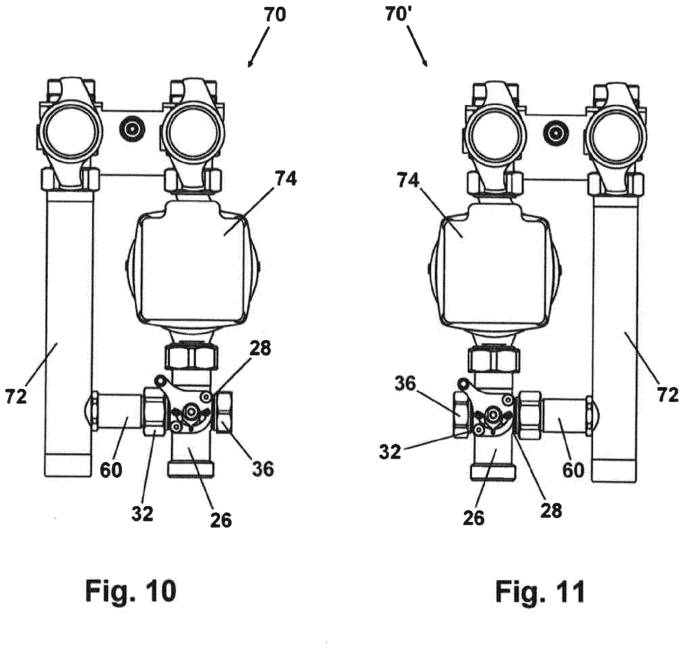

Die Fig. 10 und 11 zeigen den Einsatz des Drei-Wege-Mischers 10 in jeweils einer rechtsseitigen Regelgruppe 70 und einer linksseitigen Regelgruppe 70' einer Heizungsanlage. Jede Regelgruppe 70, 70' umfasst einen Vorlauf, der in den Anschluss 26 mündet, einen Rücklauf 72, ein Verbindungsstück 60 und eine Pumpe 74. Wie die Fig. 9 und 10 zeigen, können sowohl bei der rechtsseitigen Regelgruppe 70 als auch bei der linksseitigen Regelgruppe 70' die gleichen Bauelemente verwendet werden, so dass die rechtsseitige Regelgruppe 70 die gleiche Größe aufweist wie die linksseitige Regelgruppe 70'.

Bei einer nicht dargestellten Ausführungsform sind alle vier Anschlüsse 26, 28, 30, 32 offen. In diesem Fall dient die Armatur 10 als Verteiler. Je nach Bedarf können verschiedene Ein- und Ausgänge an die Anschlüsse 26, 28, 32 und 34 angebracht werden. Bei der Verwendung als Verteiler ist es von Vorteil, dass der Absperrkörper 46 mittels eines Stellmotors um 360 Grad drehbar ist.

Bei den in den Figuren 3 bis 11 dargestellten Ausführungsformen eines Drei-Wege-Mischers ist der Absperrkörper als massives Kreissegment ausgebildet. Alternativ kann der Absperrkörper ein hohles Kreissegment sein oder im Querschnitt die Form eines Ankers aufweisen.

Wenn bei der dargestellten Ausführungsform der zweite und vierte Anschluss mit einem Außengewinde versehen sind, so liegt es auch im Rahmen der Erfindung, dass der zweite und der vierte Anschluss jeweils ein Innengewinde aufweisen.

Alternativ zu der dargestellten Ausführungsform können der erste Anschluss mit einem Innengewinde und der dritte Anschluss mit einem Außengewinde versehen sein.

Bei der dargestellten Ausführungsform weist das Gehäuse eine quaderförmige Grundstruktur auf. Bei einer nicht dargestellten Ausführungsform ist das Gehäuse nicht quaderförmig sondern zylindrisch gestaltet. Das Gehäuse weist eine erste Stirnseite und eine, der ersten Stirnseite entgegengesetzt liegende zweite Stirnseite sowie eine Umfangsseite auf, wobei der erste, zweite, dritte und vierte Anschluss entlang der Umfangsseite im Wesentlichen äquidistant angeordnet sind. Das Aufnahmeelement für den Motor ist an einer Stirnseite des Gehäuses vorgesehen. Die andere Stirnseite ist verschlossen. Der Mischraum im Innern des Gehäuses ist zylindrisch ausgebildet und weist die gleiche Längsachse auf wie das zylindrische Gehäuse. Die Längsachse des Mischraums bzw. des zylindrischen Gehäuses ist auch die Drehachse des Absperrkörpers.

## Patentansprüche

1. Armatur umfassend ein Gehäuse (12), einen ersten, einen zweiten, einen dritten und einen vierten Anschluss (26, 28, 32, 34), die an dem Gehäuse (12) angeordnet sind, ein an dem Gehäuse (12) vorgesehenes Aufnahmeelement (38) für einen Motor und einen von einem Motor antreibbaren Absperrkörper (48),
wobei der Absperrkörper (48) im Inneren des Gehäuses (12) um eine Drehachse drehbar gelagert ist und ausgelegt ist, wenigstens einen Anschluss vollständig oder abschnittsweise zu verschließen,
wobei der erste, zweite, dritte und vierte Anschluss (26, 28, 32, 34) in einer Ebene senkrecht zur Drehachse des Absperrkörpers (48) angeordnet sind,
wobei der erste Anschluss (26) und der dritte Anschluss (30) entgegengesetzt zueinander liegen und der erste Anschluss (26) mit einem Gewinde erster Art und der dritte Anschluss (28) mit einem Gewinde zweiter Art versehen ist und
wobei der zweite Anschluss (28) und der vierte Anschluss (32) entgegengesetzt zueinander an dem Gehäuse (12) angeordnet sind und jeweils entweder ein Gewinde erster Art oder ein Gewinde zweiter Art aufweisen.

2. Armatur nach Anspruch 1, **dadurch gekennzeichnet, dass** ein Gehäuse (12) mit einer quaderförmigen Grundform vorgesehen ist, welches eine erste Stirnseite (14) und eine, der ersten Stirnseite (14) entgegengesetzt liegende zweite Stirnseite (16) und vier Umfangsseiten (18, 20, 22, 24) aufweist,
wobei der erste Anschluss (26) an einer ersten Umfangsseite (18) und der dritte Anschluss (30) an einer der ersten Umfangsseite (18) entgegengesetzt liegenden dritten Umfangsseite (22) des Gehäuses (12) angeordnet sind,
wobei der zweite Anschluss (28) an einer zweiten Umfangseite (20), der vierte Anschluss (32) an der vierten Umfangsseite (24) angeordnet sind, wobei das Aufnahmeelement (38) für einen Motor an einer Stirnseite (14) des Gehäuses (12) vorgesehen ist.

3. Armatur nach Anspruch 1, **dadurch gekennzeichnet, dass** ein Gehäuse mit einer zylindrischen Grundform vorgesehen ist, welches eine erste Stirnseite und eine, der ersten Stirnseite entgegengesetzt liegende zweite Stirnseite und eine Umfangsseite aufweist, wobei der erste, zweite, dritte und vierte Anschluss entlang der Umfangsseite angeordnet sind und das Aufnahmeelement für einen Motor an einer Stirnseite des Gehäuses vorgesehen ist.

4. Armatur nach einem der vorhergehenden Ansprüche, **dadurch gekennzeichnet, dass** im Inneren des Gehäuses (12) ein zylinderförmiger Mischraum (13) vorgesehen ist, in dem der Absperrkörper (48) drehbar angeordnet ist.

5. Armatur nach einem der vorhergehenden Ansprüche, **dadurch gekennzeichnet, dass** der Absperrkörper (48) eine in einem Schnitt senkrecht zur Drehachse kreisbogenförmige Absperrfläche (50) aufweist.

6. Armatur nach Anspruch 5, **dadurch gekennzeichnet, dass** die Absperrfläche (50) eine Bogenlänge aufweist, die einen Winkelbereich von etwa 80 Grad bis 130 Grad abdeckt.

7. Armatur nach einem der vorhergehenden Ansprüche, **dadurch gekennzeichnet, dass** der Absperrkörper (48) in einem Schnitt senkrecht zur Drehachse die Form eines Kreissegments aufweist.

8. Armatur nach einem der Ansprüche 1 bis 6, **dadurch gekennzeichnet, dass** der Absperrkörper in einem Schnitt senkrecht zur Drehachse ankerförmig ausgebildet ist.

9. Armatur nach einem der vorhergehenden Ansprüche, **dadurch gekennzeichnet, dass** die Armatur ein Dreiwegemischer ist, wobei der zweite oder der vierte Anschluss (28, 32) mittels einer Abdeckkappe (36) verschlossen sind, der erste, zweite und vierte Anschluss (26, 28, 32) Eingänge und der dritte Anschluss (30) ein Ausgang ist.

10. Armatur nach Anspruch 9, **dadurch gekennzeichnet, dass** der Absperrkörper um einen Winkelbereich von etwa 80 Grad bis 110 Grad drehbar ist.

11. Armatur nach einem der Ansprüche 1 bis 8, **dadurch gekennzeichnet, dass** die Armatur ein Verteiler ist, wobei wenigstens ein Anschluss ein Ausgang und wenigstens ein Anschluss ein Eingang ist.

12. Armatur nach Anspruch 11, **dadurch gekennzeichnet, dass** der Absperrkörper um 360 Grad drehbar ist.

13. Armatur nach einem der vorhergehenden Ansprüche, **dadurch gekennzeichnet, dass** die Armatur eine geschlossene Stellung aufweist, in der ein Anschluss (26, 28, 32, 34) verschlossen ist, und eine geöffnete Stellung, in der der Anschluss (26, 28, 32, 34) geöffnet ist, wobei der Absperrkörper (48) ausgelegt ist, von der geschlossenen Stellung in die geöffnete Stellung entweder im Uhrzeigersinn oder gegen den Uhrzeigersinn zu schwenken.

14. Armatur nach einem der vorhergehenden Ansprüche, **dadurch gekennzeichnet, dass** die Drehrichtung des Motors invertierbar ist.
